# FASCICULE DE BREVET EUROPEEN

(11) **EP 1 892 651 B1**
(45) Date de publication et mention de la délivrance du brevet: **13.08.2008**
(21) Numéro de dépôt: 07405086.5
(22) Date de dépôt: 19.03.2007
(51) Int. Cl.: G06K 19/077, G04G 1/06

(54) **Montre analogique comprenant un microtranspondeur associé à une antenne-résonnateur destinée à augmenter la distance de lecture dudit microtranspondeur avec un lecteur RFID**
Analoguhr, die einen Mikrotransponder umfasst, der mit einer Resonatorantenne verbunden ist, die die Entfernung zum Ablesen des Mikrotransponders mit einem RFID-Lesegerät vergrößern soll
Analogue watch comprising a micro-transponder associated with an antenna-resonator intended for increasing the reading distance of said micro-transponder using an RFID reader

(30) Priorité: 25.08.2006 CH 13612006
(43) Date de publication de la demande: 27.02.2008
(73) Titulaire: Winwatch SA, 1964 Conthey (CH)
(72) Inventeur: Kalbermatten, Alex, 1950 Sion (CH)

(56) Documents cités:
- EP-A- 0 884 661
- WO-A-94/09450
- WO-A-20/06072187
- FR-A1- 2 812 482

## Description

La présente invention concerne une montre, en particulier une montre-bracelet de type analogique qui comprend un microtranspondeur constitué d'une antenne et d'une puce de circuit intégré (chip) au moins et qui est associé, sans connexion électrique, par couplage électromagnétique, à une antenne passive de plus grandes dimensions, dite antenne-résonnateur, permettant à moindre encombrement et à moindre coût, d'augmenter la distance de lecture dudit microtranspondeur avec un appareil de lecture et/ou d'écriture utilisant la technologie de l'identification par radiofréquence RFID.

Il est connu selon l'art antérieur et diverses divulgations publiées à ce jour, comme par exemple DE19516227, FR2812482, WO2003/100721A1, WO2006/019587A1, des dispositifs et procédés décrivant une puce sans contact par couplage électromagnétique entre deux antennes, dont une antenne connectée électriquement au circuit intégré de la puce, notamment de type 'coil-on-chip' (antenne intégrée à la puce) et d'une antenne passive de plus grandes dimensions, dite antenne-résonnateur, qui permet d'augmenter la distance de lecture de ladite puce; les deux antennes n'étant pas électriquement connectées entre elles, mais électromagnétiquement couplées à distance par l'intermédiaire d'une boucle de couplage formée par la grande antenne, et dont les dimensions correspondent à celles de la petite antenne.

D'autre part il est bien connu d'équiper des montres, généralement des montres-bracelets, de transpondeurs pour la mémorisation d'informations qui comprennent une puce de circuit intégré (chip) reliée à une antenne et qui peuvent communiquer par des signaux radio diffusés avec un appareil de lecture et/ou d'écriture. Ces transpondeurs, aussi communément appelés étiquette électronique, sont souvent de type passif, l'énergie leur étant fournie par les fréquences radio émises par le lecteur RFID.

L'idée d'intégrer de tels transpondeurs dans la montre étant d'utiliser des progrès obtenus dans le domaine des systèmes d'identification en fréquence radio (RFID), en vue d'améliorer la protection de la montre et de ses composants contre des imitations, des contrefaçons, le marché gris ou la fraude, ou bien permettant le suivi de la montre tout au long de sa vie pour utiliser les données à des fins de contrôle de qualité, de service après-vente et de garantie, de la gestion des stocks, ou de publicité et de marketing, ou offrant des développements et applications ne concernant pas la montre, comme par exemple le contrôle d'accès ou d'identité du porteur de la montre, de clef électronique, de carte de crédit ou de débit sans contact, ou bien des nouvelles applications issues du commerce électronique et du payement électronique sans contact etc.

Selon les nombreuses divulgations publiées à ce jour comme par exemple les brevets ou les demandes de brevet EP0884661, DE10242494, WO9835452, WO03052526, JP2001208875, US6724690, US6484948, JP2003043167, US2004233789, EP1612885, US6412976, JP2002117382, JP11064544, EP1318437, DE19613491, CH690525, CH694111, US2004137963, JP2001006007, EP1065791, EP1065791, JP2001042068, JP2000275369, CH686107, JP2005181163, JP2004343625, JP2005065151, WO2005053096, JP2001272480, JP2005134223, EP1522908, EP1513220, EP0884662, JP2003152582, EP1513032, W02004025381, CH691094, EP1213629, DE19625041, US2004090868, CH692069, CH689360, il est bien connu d'intégrer le transpondeur par exemple dans la lunette, dans la carrure-lunette, dans le cadran, dans le boîtier de montre, dans le boîtier contenant le mouvement, dans le couvercle du fond du boîtier de la montre, dans l'organe de contrôle comme la couronne, dans le bracelet ou bien dans la glace de la montre. Selon ces divulgations précitées, le transpondeur est souvent muni d'une antenne de taille conséquente afin de surmonter l'inconvénient majeur qui survient à cause des effets de réflexion et/ou d'absorption dues aux divers composants dans la montre, comme par exemple les parties métalliques ou autres pièces perturbatrices des ondes radio. Ce problème survient tout particulièrement pour les montres à boîtier métallique qui contiennent un mouvement automatique ou mécanique, et cela limite considérablement le choix du type ou du modèle de montre pouvant être équipée d'un tel transpondeur.

Les solutions proposées par les divulgations précitées et l'art antérieur connu en rapport de ces dernières, ne peuvent donner que des résultats partiellement satisfaisant, car les concessions qui doivent être consenties pour intégrer une antenne plus ou moins bien placée dans la montre, vu la taille de l'antenne, va nécessairement poser des problèmes de design, d'architecture d'intérieur du boîtier ou d'esthétisme de la montre. Il ne reste alors souvent que la possibilité d'utiliser des composants et/ou des matériaux non métalliques aux caractéristiques isolateur qui sont plus favorables à la transmission des signaux radio diffusés comme les composants en plastic, en céramique ou en matière de synthèse par exemple. Mais justement pour les raisons de design, de prestige, de choix de composants et/ou matériaux nobles et à forte valeur ajoutée, ou de qualité du produit en général, le fabricant de montres, en particulier le fabricant de montres de luxe, n'utilise que rarement de tels composants pour la fabrication d'une montre, car cela confèrerait au produit une connotation négative de 'gadget' et n'est utilisé en général que pour la fabrication de montres dites 'bas de gamme'. C'est pourquoi les solutions proposées donnent un résultat peu satisfaisant, car la taille volumineuse de l'antenne externe attachée au circuit intégré constituant le transpondeur, qui certes offre une distance de lecture souvent suffisante et qui peut aller de quelques centimètres à plusieurs dizaines de centimètres selon le résultat escompté, occasionne un prix élevé de revient et une intégration problématique du transpondeur dans la boîte de montre ou dans le bracelet et représente donc de gênantes barrières esthétiques, économiques et techniques et ne sera que peu ou pas praticable pour le segment des montres analogiques classiques dans le moyen et haut de gamme, lesquelles ont toutes un boîtier fabriqué en métal, en acier ou bien en métal précieux tel qu'en or, en argent, etc. Il existe une solution proposée en vue de remédier à ces problèmes et qui a été divulguée par le demandeur de la présente invention par les deux publications de demande de brevet WO2005/064421A1 et WO2006/072187A2, qui consiste à équiper la glace d'une montre, ou bien les aiguilles d'une montre, ou bien l'axe d'aiguilles d'une montre d'un microtranspondeur de technologie RFID de petite taille, ce qui permet une intégration non-obtrusive dudit microtranspondeur dans la montre en général, et tout particulièrement dans la montre de luxe, et ceci solutionne avantageusement la plupart des problèmes précités ci-dessus. Mais malgré que ces deux divulgations proposent une intégration quasi parfaite et invisible dudit microtranspondeur dans la montre, ce qui est rendu possible grâce à sa très petite taille actuelle et son potentiel de miniaturisation futur, ledit microtranspondeur pose un problème de distance de lecture qui reste très réduite, car il ne peut être lu par un lecteur externe qu'à très faible distance seulement, actuellement d'un millimètre à quelques millimètres au plus.

L'invention a pour but principal de pallier ces inconvénients de la manière définie dans les revendications, et consiste à présenter une solution adaptée pour augmenter la distance de lecture dudit microtranspondeur avec un appareil de lecture et/ou d'écriture utilisant la technologie de l'identification par radiofréquence RFID. Pour atteindre cet objectif et solutionner le problème, la présente invention prévoit non seulement d'équiper une montre analogique d'un dispositif qui comprend un microtranspondeur constitué d'une antenne et d'une puce de circuit intégré (chip), qui est associé sans connexion électrique, par couplage électromagnétique, à une antenne-résonnateur, et qui permet d'augmenter la distance de lecture dudit microtranspondeur, mais solutionne aussi le problème qui se pose pour une intégration à moindre encombrement, non obtrusive et à moindre coût de ladite antenne-résonnateur dans la montre analogique.

L'avantage principal recherché de la présente invention est de prolonger la distance de lecture dudit microtranspondeur à une distance satisfaisante pour offrir au porteur de montre équipée d'un tel dispositif, le meilleur confort possible pour accéder à une multitude de nouveaux services, applications et solutions émergents de la technologie RFID, comme par exemple le contrôle d'accès ou d'identité du porteur de la montre, clef électronique, carte de crédit ou de débit sans contact, ou bien le commerce électronique, le payement électronique sans contact (contactless payments), le mobile commerce (m-commerce), le Near Field Communication (NFC) etc. Mais bien entendu, une plus grande distance de lecture facilite également grandement les tâches d'authentification, de suivi et de traçabilité de la montre elle-même au travers de la chaîne logistique du fabricant de montres par exemple. Un autre avantage majeur recherché est de pouvoir intégrer l'antenne-résonnateur dans la montre de façon non-obtrusive et à moindre encombrement, et selon le mode de réalisation choisi, voir même de façon complètement invisible du regard du porteur de la montre. Un autre avantage majeur de ce dispositif réside certainement dans son faible coût de production, d'assemblage et d'intégration dans la montre. Quand on sait que les coûts d'assemblage d'une étiquette électronique classique à connexion électrique entre le circuit intégré (chip) et son antenne, représente facilement le tiers du coût de fabrication d'une étiquette électronique, la présente invention offre une alternative vraiment économique. D'autre part une telle solution offre l'avantage d'une très grande flexibilité d'intégration et permet une certaine marge de manoeuvre pour loger l'antenne-résonnateur idéalement dans la montre, car ladite antenne-résonnateur n'est pas 'physiquement soudée' au microtranspondeur. De ce fait de multiples emplacements dans la montre analogique deviennent subitement possibles pour une intégration discrète et à moindre encombrement, à condition bien sur de choisir un emplacement du dispositif qui assure une bonne transmission des signaux radio vers le lecteur RFID externe. Il en résulte un avantage, que la montre garde son intégrité mécanique, architecturale et esthétique d'origine, un avantage qui est très important pour les montres mécaniques et automatiques du moyen et haut de gamme, dites montres de luxe. Selon un mode d'exécution possible, qui est aussi le mode d'exécution préféré de la présente invention, lors de la réalisation d'une telle antenne-résonnateur imprimée sous la glace d'une montre analogique, un autre avantage de l'invention est la possibilité d'ajouter ou de remplacer aisément le dispositif inventif, ce qui fait que la montre décrite dans la présente invention peut être équipée d'un tel dispositif à tout moment de sa vie, lors de sa fabrication en série, en option et sur commande, ou par la suite par un homme du métier autorisé tel que l'horloger attitré. L'échange s'opère dès lors par l'extraction de l'ancienne glace, puis d'intégrer la nouvelle glace de montre munie du dispositif comprenant le microtranspondeur couplé à son antenne-résonnateur. Pour des raisons esthétiques et de besoin de lecture irréprochable du temps, et bien sur afin de maintenir plus ou moins intact la transparence originale du verre de la glace, l'antenne-résonnateur sera de préférence composée d'un polymère conducteur transparent. A titre d'exemple, une composition d'encre transparente incorporant au moins un composé polymère électriquement conducteur transparent tel qu'un polythiophène, notamment un mélange PEDOT/PSS, serait parfaitement idéal et ladite antenne-résonnateur pourrait être réalisée par impression sur la surface inférieure de la glace de la montre par exemple. De plus, un avantage très important de la présente invention est la possibilité de pouvoir facilement réaliser une telle antenne-résonnateur à géométrie et à dimension variable et bien sur cela à prix très économique et qui de plus se marie très facilement avec différents types et modèles de microtranspondeurs disponibles sur le marché, comme par exemples d'une puce à mémoire ROM, RAM, EEPROM, flash, voir même d'un microprocesseur etc, ce qui est un atout certain pour satisfaire les exigences élevées des fabricants de montres de luxe, des instituts financiers et bancaires pour le payment électronique sans contact etc. Un autre avantage recherché de l'invention est finalement de pouvoir être usiné à l'aide de machines et outils conventionnels simples, prévus pour la production en grandes séries. L'invention est définie dans la revendication 1.

D'autres particularités, avantages et caractéristiques de l'invention ressortiront plus clairement de la description qui va suivre d'un mode de réalisation de l'invention donné à titre d'exemple non limitatif, et représenté sur les dessins annexes :
- la fig. 1 est un diagramme schématique montrant le fonctionnement du dispositif en mode de lecture et/ou d'écriture avec un lecteur RFID externe.
- la fig. 2 est une vue de dessus très simplifiée d'une glace de montre comprenant le microtranspondeur constitué d'une antenne et d'une puce de circuit intégré (chip) au moins, selon le mode de réalisation préférentiel de l'invention.
- la fig. 2.1 est une vue de dessus très simplifiée d'une glace de montre comprenant l'antenne-résonnateur composée d'un conducteur transparent, selon le mode de réalisation préférentiel de l'invention.
- la fig. 2.2 est une vue de dessus très simplifiée d'une glace de montre comprenant le dispositif constitué du microtranspondeur associé à l'antenne-résonnateur composée d'un conducteur transparent, selon le mode de réalisation préférentiel de l'invention.
- la fig. 3 est une coupe agrandie simplifiée dans la montre analogique selon le mode d'exécution préférentiel de l'invention.
- la figl. 3.1 est une coupe simplifiée dans la montre analogique selon le mode d'exécution préférentiel de l'invention.

Pour des raisons de clarté, nous avons décidé de définir préalablement la terminologie utilisée dans la présente description d'un mode de réalisation préférentiel avec la numérotation suivante :
- 1 =: microtranspondeur
- 1.1 =: puce de circuit intégré (chip)
- 1.2 =: = antenne intégrée à la puce (par exemple de type 'coil-on-chip')
- 2 =: antenne-résonnateur composée d'un conducteur transparent
- 2.1 =: petite boucle formée par l'antenne-résonnateur aux dimensions de l'antenne intégrée à la puce
- 2.2 =: grande boucle formée par l'antenne-résonnateur
- 3 =: glace de montre
- 4 =: montre-bracelet de type analogique
- 5 =: cadran
- 6 =: boîtier de montre
- 7 =: mouvement mécanique ou automatique

Bien que l'invention ne soit évidemment pas limitée à la forme d'exécution figurant ci-après, la description qui suit est faite dans le cas où la montre-bracelet de type analogique 4 est équipée d'un dispositif qui comprend un microtranspondeur 1 constitué d'une puce de circuit intégré (chip) 1.1 et d'une antenne intégrée à la puce 1.2 au moins et qui est associé sans connexion électrique, mais par couplage électromagnétique, à une antenne passive de plus grandes dimensions, dite antenne-résonnateur 2, permettant à moindre encombrement et à moindre coût, d'augmenter sensiblement la distance de lecture dudit microtranspondeur 1 avec un appareil de lecture et/ou d'écriture non représenté sur le dessin avec lequel il est amené à communiquer.

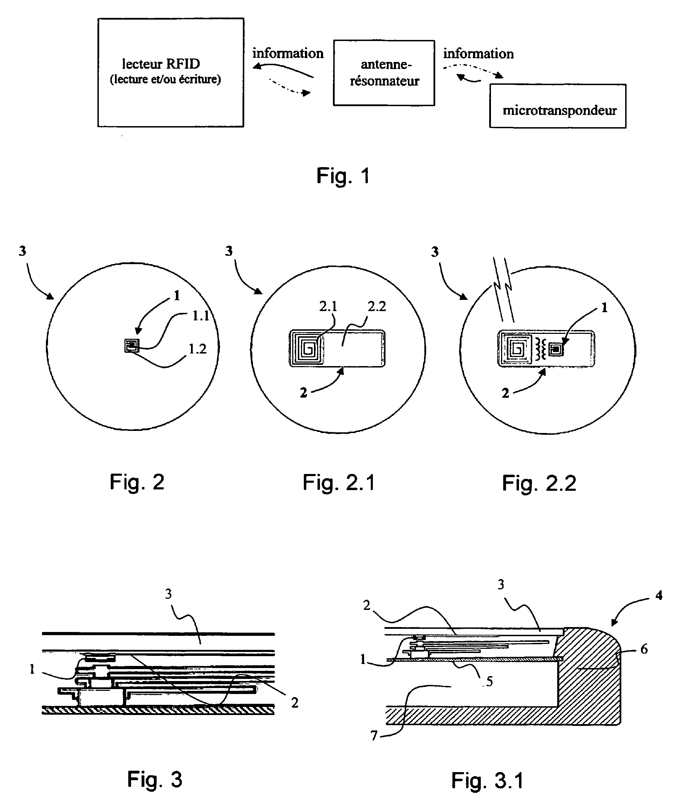

Ladite technologie de transmission de données sur laquelle repose la présente invention utilise communément l'identification par radiofréquence (RFID) qui ne sera pas décrite ici, car elle fait partie de l'état de la technique et est connue depuis longtemps déjà et largement utilisée dans l'industrie. Les systèmes RFID en couplage électromagnétique utilisent généralement des transpondeurs passifs; le mode de fonctionnement en couplage magnétique concerne les systèmes oeuvrant aux fréquences à de 125 kHz en basse fréquences LF et à 13.56 MHz en haute fréquence HF, tandis que le mode de fonctionnement en couplage électrique concerne les systèmes oeuvrant aux fréquences UHF allant de 860-960MHZ et à 2.45GHz et plus aux fréquences micro-ondes. La figure 1 montre de façon très simplifiée un diagramme schématique du fonctionnement du dispositif en mode de lecture et/ou d'écriture avec un lecteur RFID externe. Ce dispositif est essentiellement basé sur une puce sans contact par couplage électromagnétique entre deux antennes, dont une antenne 1.2 connectée électriquement au circuit intégré de la puce 1.1 formant le microtranspondeur 1 et une antenne passive de plus grandes dimensions, dite antenne-résonnateur 2 qui permet d'augmenter la distance de lecture dudit microtranspondeur 1 avec un appareil de lecture et/ou d'écriture, les deux antennes n'étant pas électriquement connectées entre elles mais électro-magnétiquement couplées par l'intermédiaire d'une boucle de couplage comme cela est bien connu dans l'art antérieur et divulgué par exemple dans les publications de brevets. DE19516227, FR2812482, WO2003/100721A1 et W02006/019587A1, décrivant différents procédés et modes de fonctionnement de tels dispositifs et qui ne sera donc pas décrit plus en détail ici, car faisant partie de l'état technique et étant bien connu par l'homme du métier. Par couplage électromagnétique on désigne toute forme de couplage par l'intermédiaire de champ(s) électrique(s) et/ou magnétiques et/ou électromagnétiques; par couplage électromagnétique on comprend dans la présente invention le couplage inductif et/ou magnétique et sans connexion électrique de l'antenne-résonnateur 2 avec le microtranspondeur 1. Par connexion électrique on désigne dans la présente invention le couplage par un contact électrique direct entre l'antenne 1.2 et la puce de circuit intégré (chip) 1.1 qui tous les deux constituent le microtranspondeur 1. Par ailleurs le terme de microtranspondeur 1 désigne tout transpondeur de technologie RFID qui est de taille égale ou bien inférieure à 5mm x 5mm x 1 mm, constitué au moins d'une antenne 1.2 et d'une puce de circuit intégré (chip) 1.1 et réalisé essentiellement selon les technologies des circuits intégrés. Il peut s'agir d'une puce à mémoire ROM, RAM, EEPROM, flash, etc. ou bien d'un microprocesseur de toute autre technologie connue. L'antenne-résonnateur 2 est une antenne d'adaptation ayant des dimensions adaptées pour permettre la transmission d'information à distance entre l'antenne 1.2 contenu dans le microtranspondeur 1 et une antenne de puissance d'un appareil de lecture et/ou d'écriture externe utilisant la technologie de l'identification par radiofréquence (RFID), alors que la montre-bracelet de type analogique 4 équipée dudit dispositif avec microtranspondeur 1 et antenne-résonnateur 2 est placée dans le champ de cette antenne de puissance. Selon les différents modes de réalisations possibles de la présente invention, l'antenne-résonnateur 2 composée d'un conducteur transparent, peut être réalisée de multiples façons et en différentes matières de composition comme par exemple faite de cuivre, d'aluminium ou bien d'argent, et/ou par exemple réalisée par impression au moyen d'une encre composée de particules ou de polymères conducteurs etc., ou mieux encore comme antenne-résonnateur 2 transparente à la lumière visible et électriquement conductrice après séchage. On utilise par exemple une composition d'encre transparente incorporant au moins un composé polymère électriquement conducteur transparent, tel qu'un polythiophène, notamment un mélange PEDOT/PSS ou bien un mélange Poly(2,3-Dihydro-thieno-1,4-Dioxin)Poly(Styrenesulfonate). De la sorte, l'antenne-résonnateur 2 est invisible ou très peu visible, et peut sans autre être associée à la glace de montre 3 par exemple, tout en maintenant les caractéristiques de transparence initiales de la glace de montre 3. Mais bien entendu d'autres formes de réalisation sont possibles et selon les multiples formes d'exécutions possibles, on peut imaginer que l'antenne-résonnateur, composée d'un conducteur transparent, est imprimée, injectée, appliquée, apposée, fixée, vaporisée, incorporée ou bien collée par tout autre moyen de solidarisation connu pour autant qu'elle soit toujours couplée électromagnétiquement et en contact immédiat et/ou à proximité imminente avec le microtranspondeur 1 qui de préférence et comme cela est connu dans la demande de brevet W02005/064421 A1 et W02006/072187A2 peut être placé dans ou sous la glace de montre 3, ou bien sur ou dans les aiguilles d'une montre ou bien l'axe d'aiguilles d'une montre, mais également partout ailleurs dans la montre comme par exemple sur ou dans le cadran 5.

Un mode de réalisation possible de l'invention, qui est également un mode de réalisation préférentiel de la présente invention, consiste à équiper la glace 3 d'une montre-bracelet de type analogique 4 d'un dispositif qui comprend un microtranspondeur 1 constitué d'une puce de circuit intégré (chip) 1.1 et d'une antenne intégrée à la puce 1.2 et qui est associé sans connexion électrique et par couplage électromagnétique, à une antenne passive composée d'un conducteur transparent de plus grandes dimensions, dite antenne-résonnateur 2, permettant à moindre encombrement, à moindre coût et de façon quasi invisible, d'augmenter sensiblement la distance de lecture du microtranspondeur 1 positionné sous la glace 3 avec un appareil de lecture et/ou d'écriture non représenté sur le dessin avec lequel il est amené à communiquer. Il est bien connu que la glace de montre 3 est un corps isolateur et non-conducteur parfait dans la montre 4, ce qui fait d'elle un support idéal pour porter le dispositif inventif de la présente invention. La figure 2 montre sous une forme simplifiée une glace de montre 3 équipée d'un microtranspondeur 1 constitué d'une puce de circuit intégré (chip) 1.1 et d'une antenne intégrée à la puce 1.2, notamment tel que décrit dans W02005/064421 A1, US2006/0140058A1 et EP1597636A0. Afin de pouvoir remédier à ce problème de distance de lecture très limitée dudit microtranspondeur 1, qui ne peut être lu par un lecteur externe qu'à très faible distance seulement, actuellement d'un millimètre à quelques millimètres au plus, on équipe la glace de montre 3 d'une antenne-résonnateur 2, tel que représenté sur la figure 2.1. qui permettra d'obtenir une distance de lecture convenable et suffisante pour offrir par exemple au porteur de la montre équipée d'une puce RFID le meilleur confort possible pour accéder à une multitude de nouveaux services, d'applications et de solutions émergents de la technologie RFID, comme par exemple le contrôle d'accès ou d'identité du porteur de la montre, clef électronique, carte de crédit ou de débit sans contact, ou bien le commerce électronique, le payement électronique sans contact (contactless payments), le mobile commerce (m-commerce), le Near Field Communication (NFC), mais bien entendu, une plus grande distance de lecture peut également faciliter les tâches d'authentification, de suivi et de traçabilité de la montre au travers de la chaîne logistique du fabricant de montres par exemple. Finalement la figure 2.2 montre cette même glace de montre 3 comprenant ledit microtranspondeur 1 et son antenne intégrée 1.2 qui est associée sans connexion électrique, par couplage électromagnétique à distance très imminente si possible, ou mieux encore par contact direct avec la petite boucle 2.1 formée par l'antenne-résonnateur 2 aux dimensions de l'antenne intégrée à la puce 1.2, et la grande boucle 2.2 formée également par ladite antenne-résonnateur 2, permettant à moindre encombrement et à moindre coût, d'augmenter sensiblement la distance de lecture dudit microtranspondeur 1 avec un appareil de lecture et/ou d'écriture utilisant la technologie de l'identification par radiofréquence RFID, non représenté sur le dessin, avec lequel il est amené à communiquer. Par ailleurs, avantageusement et toujours selon le même mode d'exécution préférentiel de l'invention, conformément à la figure 3.1 qui est une coupe simplifiée à échelle normale et la figure 3 qui est une coupe agrandie simplifiée dans la montre analogique représentée ici par la référence générale 4. La montre-bracelet de type analogique 4, comporte outre les composants classiques d'une montre, un boîtier de montre 6, un mouvement mécanique ou automatique 7, un cadran 5 et la glace 3 qui porte l'antenne-résonnateur 2 qui est réalisée par impression sur la surface intérieure de ladite glace 3. On utilise une composition d'encre transparente incorporant au moins un composé polymère électriquement conducteur transparent tel qu'un polythiophène, notamment un mélage PEDOT/PSS. De la sorte, l'antenne-résonnateur 2 est invisible ou peu visible et peut être imprimée sans aucun problème esthétique ou de transparence sur la glace 3. L'encre peut être composée d'autres types de mélange liquides, semi-liquides etc., compatible avec la glace de montre 3. Cela dit et par souci de précision, la glace 3 de la montre-bracelet de type analogique 4 qui est représentée schématiquement à la figure 2.2 comprend en tant que produit fini un microtranspondeur 1 associé à son antenne-résonnateur 2. Il est bien entendu que la montre analogique 4 comprenant ce dispositif de microtranspondeur 1 associé à une antenne-résonnateur 2 destinée à augmenter la distance de lecture dudit microtranspondeur avec un lecteur RFID qui vient d'être décrite selon le mode de réalisation préférentiel, peut encore subir d'autres modifications pour une intégration et un fonctionnement optimal dudit dispositif dans la montre 4, et par là se présenter sous d'autres formes et variantes, évidentes pour l'homme du métier, sans sortir du cadre de la présente invention et l'on peut imaginer que par exemple l'antenne-résonnateur 2 est à proximité très imminente avec le microtranspondeur 1 qui de préférence et selon le demande de brevet WO2005/064421A1 et WO2006/072187A2 est placé dans ou sous la glace de montre 3, ou bien sur ou dans les aiguilles d'une montre ou bien l'axe d'aiguilles d'une montre, mais également partout ailleurs dans la montre comme par exemple sur ou dans le cadran 5.

## Revendications

1. Montre analogique (4) équipée d'un dispositif qui comprend un microtranspondeur (1) constitué au moins d'une puce de circuit intégré (1.1) et d'une antenne intégrée à la puce (1.2), **caractérisée en ce que** ledit microtranspondeur (1) est couplé magnétiquement et/ou électromagnétiquement à une antenne passive de plus grandes dimensions située à proximité du microtranspondeur (1), dite antenne-résonnateur (2), ladite antenne-résonnateur (2) est composée d'un conducteur transparent et fixée sur, dans ou sous la glace de montre (4).

2. Montre analogique (4) selon la revendication 1, **caractérisée en ce que** la glace de montre (3) ou bien le cadran (5) ou bien les aiguilles de montre ou bien le couvercle du fond du boîtier de montre ou bien le boîtier de montre (6) contient le microtranspondeur (1) connecté par couplage magnétique et/ou électromagnétique à l'antenne-résonnateur (2) fixée sur, dans ou sous la glace de montre (4).

3. Montre analogique selon la revendication 1 ou 2, **caractérisé en ce que** ledit microtranspondeur (1) est connecté avec l'antenne-résonnateur (2) sous toute forme de couplage possible par l'intermédiaire de champ(s) électrique(s) et/ou magnétiques et/ou électromagnétiques.

4. Montre analogique selon les revendications 1 à 3, **caractérisé en ce que** le microtranspondeur (1) fonctionne en mode de couplage magnétique oeuvrant aux fréquences à 125kHz en basse fréquence LF ou à 13.56MHz en haute fréquence HF ou en mode de couplage électrique oeuvrant aux fréquences UHF allant de 860-960MHz ou à 2.45GHz et plus aux fréquences micro-ondes.

5. Montre analogique selon la revendication 1, 3 ou 4, **caractérisé en ce que** l'antenne-résonnateur (2) est fixée, collée, imprimée, injectée, appliquée, apposée, vaporisée, incorporée, intégrée ou giclée sur, dans et/ou sous la glace de montre (3), ladite glace de montre (3) étant le support idéal dans la montre analogique (4) aux caractéristiques non magnétique et/ou électriquement isolant, pour une transmission quasi sans atténuation des signaux radio entre le lecteur externe et le microtranspondeur (1).

6. Montre analogique selon les revendications 1, 3 ou 4, **caractérisé en ce que** le microtranspondeur (1) est situé sur le même support que l'antenne-résonnateur (2), à savoir la glace de montre (3), permettant d'obtenir grâce à la proximité directe et/ou immédiate des deux antennes, un couplage magnétique et/ou électromagnétique non altéré par la distance.

7. Montre analogique selon l'une des revendications précédentes, **caractérisé en ce que** l'antenne-résonnateur (2) est réalisée par impression au moyen d'une encre composée de particules ou de polymères conducteurs, comme par exemple une composition d'encre transparente incorporant au moins un composé polymère électriquement conducteur transparent, tel qu'un polythiophène, notamment un mélange PEDOT/PSS, ou bien un mélange Poly(2,3-Dihydro-thieno-1,4-Dioxin)Poly(Styrenesulfonate), ou bien un mélange Indium tin oxide (ITO, or tin-doped indium oxide), ou d'autres alternatives comme aluminium-doped zinc oxide, ou bien un substrat de cuivre, d'aluminium, d'argent, or ou bien composée d'autres matières.

## Claims

1. Analog watch (4) equipped with a device that contains a micro-transponder (1) consisting of at least an integrated circuit chip (1.1) and an antenna integrated on the chip (1.2), **characterized in that** the aforementioned micro-transponder (1) is magnetically and/or electromagnetically coupled to a passive antenna of greater dimensions located near the micro-transponder (1), said antenna-resonator (2), the aforementioned antenna-resonator (2) made up of a transparent conductor and is fixed on, in or under the glass of a watch (3).

2. Analog watch (4) according to claim 1, **characterized in that** the glass of a watch (3) or the dial (5) or the hands or the lid of the back of the watchcase or the watchcase (6) contains the micro-transponder (1) connected by magnetic and/or electromagnetic coupling to the antenna-resonator (2) fixed on, in or under the glass of a watch (3).

3. Analog watch (4) according to claim 1 or 2, **characterized in that** the aforementioned micro-transponder (1) is connected to the antenna-resonator (2) in any possible way of coupling by the intermediary of electric(s) and/or magnetic(s) and/or electromagnetic(s) field(s).

4. Analog watch (4) according to claims 1 to 3, **characterized in that** the micro-transponder (1) operates in the mode of magnetic coupling with a working frequency of 125kHz in the low frequency LF or 13.56MHz in the high frequency HF or in the mode of electric coupling using UHF frequencies responding in the range of 860-960MHz or at a frequency of 2.45GHz and higher in the microwave frequency range.

5. Analog watch (4) according to claim 1, 3 or 4, **characterized in that** the antenna-resonator (2) is fixed, stuck, printed, injected, applied, affixed, vaporized, embedded, integrated or injection-moulded on, in and/or under the glass of a watch (3), the aforementioned glass of a watch (3) being the ideal carrier substrate in the analog watch (4) with non-magnetic and/or dielectric characteristics, for a transmission quasi without attenuation of the radio signals between the external reader and the micro-transponder (1).

6. Analog watch (4) according to claim 1, 3 or 4, **characterized in that** the micro-transponder (1) is situated on the same carrier substrate as the antenna-resonator (2), namely the glass of a watch (3), allowing to obtain thanks to the direct and/or immediate proximity of the two antennas, a magnetic and/or electromagnetic coupling non affected by the distance.

7. Analog watch (4) according to one of the preceding claims, **characterized in that** the antenna-resonator (2) is printed by means of an ink made up of conducting particles or polymers, such as for example a composition of a transparent ink incorporating at least a transparent electrically conductive composite polymer, such as Polythiophene, in particular a mixture of the PEDOT/PSS, or a mixture of Poly (2,3-Dihydro-thieno-1,4-Dioxin) Poly (Styrenesulfonate), or a mixture of Indium tin oxide (ITO, or tin-doped indium oxide), or other alternatives like aluminium-doped zinc oxide, or a basis of copper, aluminium, silver, gold or made up of other matters.

## Patentansprüche

1. Analoguhr (4), ausgestattet mit einer Vorrichtung die einen Mikrotransponder (1) enthält, bestehend aus mindestens einer integrierten Schaltung (Chip) (1.1) und einer im Chip integrierten Antenne (1.2), **dadurch gekennzeichnet, dass** der genannte Mikrotransponder (1) magnetisch und/oder elektromagnetisch mit einer passiven Antenne von grösserer Dimension gekoppelt ist, welche in unmittelbarer Nähe zum Mikrotransponder (1) angeordnet ist, genannte Resonatorantenne (2), die genannte Resonatorantenne (2) besteht aus einem transparenten Leiter und ist auf, in oder unter dem Glas der Uhr (3) befestigt.

2. Analoguhr (4) gemäss Anspruch 1, **dadurch gekennzeichnet, dass** das Glas der Uhr (3) oder das Zifferblatt (5) oder Zeiger der Uhr oder der Deckel des Bodens des Uhrengehäuses oder das Uhrengehäuse (6) den Mikrotransponder (1) enthält, der magnetisch und/oder elektromagnetisch gekoppelt ist mit der Resonatorantenne (2), welche auf, in oder unter dem Glas der Uhr (3) befestigt ist.

3. Analoguhr (4) gemäss Anspruch 1 oder 2, **dadurch gekennzeichnet, dass** der genannte Mikrotransponder (1) auf jede mögliche Art der Kopplung durch elektrische(s) und/oder magnetische(s) und/oder elektromagnetische(s) Feld(er.) verbunden ist mit der Resonatorantenne (2).

4. Analoguhr (4) gemäss Anspruch 1 bis 3, **dadurch gekennzeichnet, dass** der Mikrotransponder (1) im Modus der magnetischen Kopplung funktioniert mit Frequenzen von 125kHz im Nieder-Frequenzbereich LF oder von 13.56MHz im Hoher Frequenzbereich HF oder im Modus der elektrischen Kopplung im Frequenzbereich UHF mit Frequenzen zwischen 860 - 960MHz oder 2.45GHz und darüber im Mikrowellenbereich.

5. Analoguhr (4) gemäss Anspruch 1, 3 oder 4, **dadurch gekennzeichnet, dass** die Resonatorantenne (2) auf, in und/oder unter dem Glas der Uhr (3) fixiert, aufgeklebt, gedruckt, eingespritzt, aufgetragen, angehängt, aufgesprüht, eingegossen, integriert oder spritzgegossen ist, das genannte Glas der Uhr (3) ist das ideale Trägersubstrat in der Analoguhr (4) mit nicht magnetischen und/oder dielektrischen Eigenschaften, für eine Uebertragung fast ohne Abschwächung der Radiosignale zwischen dem externen Lesegerät und dem Mikrotransponder (1).

6. Analoguhr (4) gemäss Anspruch 1, 3 oder 4, **dadurch gekennzeichnet, dass** der Mikrotransponder (1) auf demselben Trägersubstrat angeordnet ist wie die Resonatorantenne (2), nämlich das Glas der Uhr (3), und dank der direkten und/oder nächsten Nähe der beiden Antennen eine magnetische und/oder elektromagnetische Kopplung ermöglicht, die nicht beeinträchtigt ist durch die Distanz.

7. Analoguhr (4) gemäss einem der vorherigen Ansprüche, **dadurch gekennzeichnet, dass** die Resonatorantenne (2) durch Drucken realisiert wird mittels einer Tinte, die zusammengesetzt ist aus leitfähigen Partikeln oder Polymeren, wie zum Beispiel eine transparente Tintenzusammensetzung bestehend aus mindestens einer durchsichtigen, elektrisch leitenden Polymerverbindung wie Polythiophene, insbesondere eine PEDOT/PSS Mischung, oder eine Poly(2,3-Dihydro-thieno-1,4-Dioxin) Poly (Styrenesulfonate) Mischung, oder eine Indium tin oxide Mischung (ITO, or tin-doped indium oxide), oder andere Alternativen wie eine Aluminium-doped zinc oxide Mischung, oder auf Basis von Kupfer, Aluminium, Silber, Gold oder bestehend aus sonstiger Materie.
